**Europäisches Patentamt**

**European Patent Office**

**Office européen des brevets**

(19)

(11) Numéro de publication: **0 288 386**
**B1**

(12) # FASCICULE DE BREVET EUROPEEN

(45) Date de publication du fascicule du brevet:
**07.11.90**

(51) Int. Cl.⁵: **B60R 21/06,** B60N 2/00

(21) Numéro de dépôt: **88400968.9**

(22) Date de dépôt: **21.04.88**

(54) **Siège avant individuel de véhicule.**

(30) Priorité: **23.04.87 FR 8705873**

(43) Date de publication de la demande:
**26.10.88 Bulletin 88/43**

(45) Mention de la délivrance du brevet:
**07.11.90 Bulletin 90/45**

(84) Etats contractants désignés:
**DE GB IT**

(56) Documents cités:
**DE-A- 2 448 527**
**FR-A- 2 397 957**
**US-A- 4 311 339**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Nicolas, Jean-Yves, 8, rue des Cailloux, F-92110 Clichy(FR)**

(74) Mandataire: **Boivin, Claude, 9, rue Edouard-Charton, F-78000 Versailles(FR)**

## Description

On a constaté de nombreux accidents dans lesquels des enfants assis sur la banquette arrière d'un véhicule automobile étaient projetés, lors d'un freinage brutal ou d'un choc, sur la console centrale ou sur la planche de bord, en passant entre le siège du conducteur et celui du passager. Pour les éviter, il est connu de tendre un filet de protection entre les dossiers des sièges avant; le document DE-A 2 448 527 décrit un filet de protection de ce genre.

Mais les filets de protection réalisés jusqu'à présent présentent de nombreux inconvénients. Ils sont nécessairement de grandes dimensions, donc inesthétiques. Leurs moyens d'accrochage sur les dossiers des sièges abîment ces dossiers et gênent les occupants des sièges. Leur montage est délicat et, si le filet est mal monté, il est inefficace.

La présente invention a pour objet un siège avant individuel de véhicule, qui permet une fixation facile d'un filet de protection sans gêner l'occupant du siège.

Le siège selon l'invention, dont le dossier comporte une paroi arrière rigide ainsi qu'un dispositif de fixation pour un filet de retenue, est caractérisé en ce que le dispositif de fixation est constitué par des crochets et en ce que la paroi présente sur l'un au moins de ses bords verticaux deux ou plusieurs découpes délimitant les crochets.

On a décrit ci-après, à titre d'exemples non limitatifs, deux modes de réalisation du siège selon l'invention, avec référence aux dessins annexés dans lesquels:

La Figure 1 est une vue en perspective montrant vus de l'arrière les deux sièges avant d'un véhicule automobile;

La Figure 2 est une vue en perspective d'un détail de l'un des sièges;

La Figure 3 montre en perspective vue de l'arrière un autre mode de réalisation du siège;

La Figure 4 en est une coupe suivant IV–IV de la Figure 3.

Au dessin, on voit le siège avant gauche 1a et le siège avant droit 1b d'un véhicule automobile. Le dossier de chacun de ces sièges comprend un garnissage arrière rigide 2 et une matelassure élastique 3 fixés sur une armature non représentée.

Le garnissage 2 comporte une paroi 2a et des bords verticaux 2a. Le bord vertical droit du dossier du siège 1a et le bord vertical gauche du dossier du siège 1b présentent deux ou plusieurs découpes 4 délimitant des crochets 5 dont la forme générale est semicirculaire et qui sont orientés vers le plan médian longitudinal du dossier. Des dépressions 4a sont ménagées dans la paroi 2a autour des crochets 5. Les découpes 4 sont reliées entre elles par des dépressions longitudinales 6.

Les crochets 5, qui se trouvent en retrait de la face plane arrière de la paroi 2 et n'émergent donc pas de celle-ci, permettent la fixation d'un filet de retenue maillé 7 de forme générale rectangulaire et disposé entre les deux sièges 1a et 1b; ce filet présentant à sa périphérie un cordon élastique 8. Entre deux crochets successifs 5, ce cordon 8 est engagé dans la dépression 6 s'étendant entre ces crochets. Grâce aux crochets 5, le filet 7 est facile à monter tout en étant esthétique et d'un prix de revient peu élevé. Il peut être démonté à volonté sans abîmer les sièges et le garnissage arrière 2 ne présente aucune saillie dangereuse.

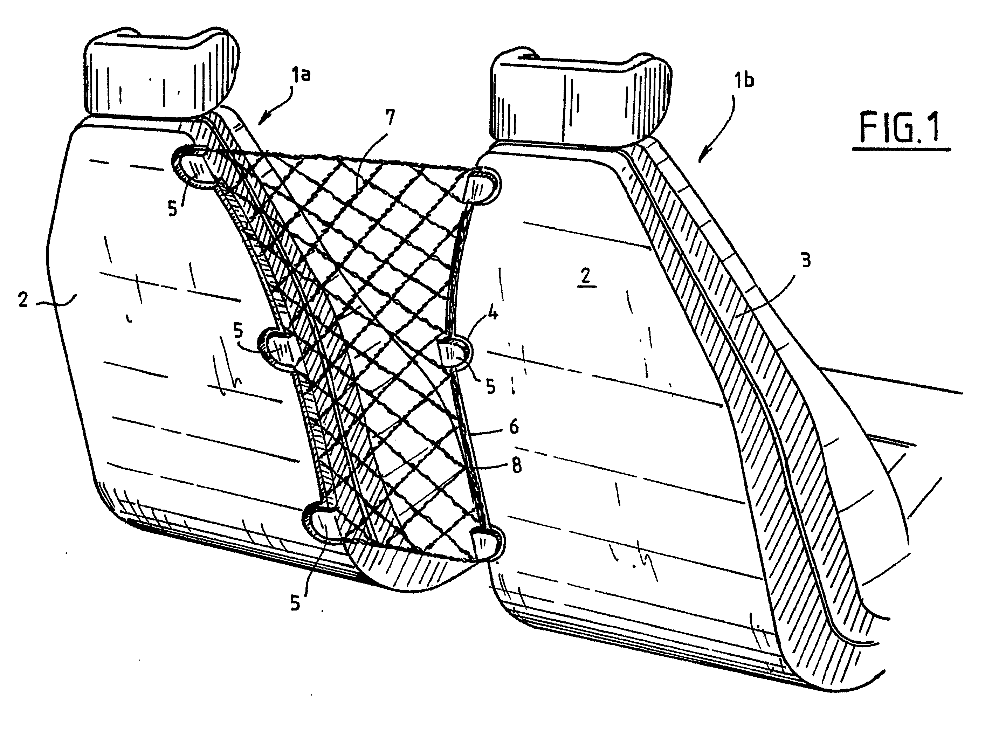

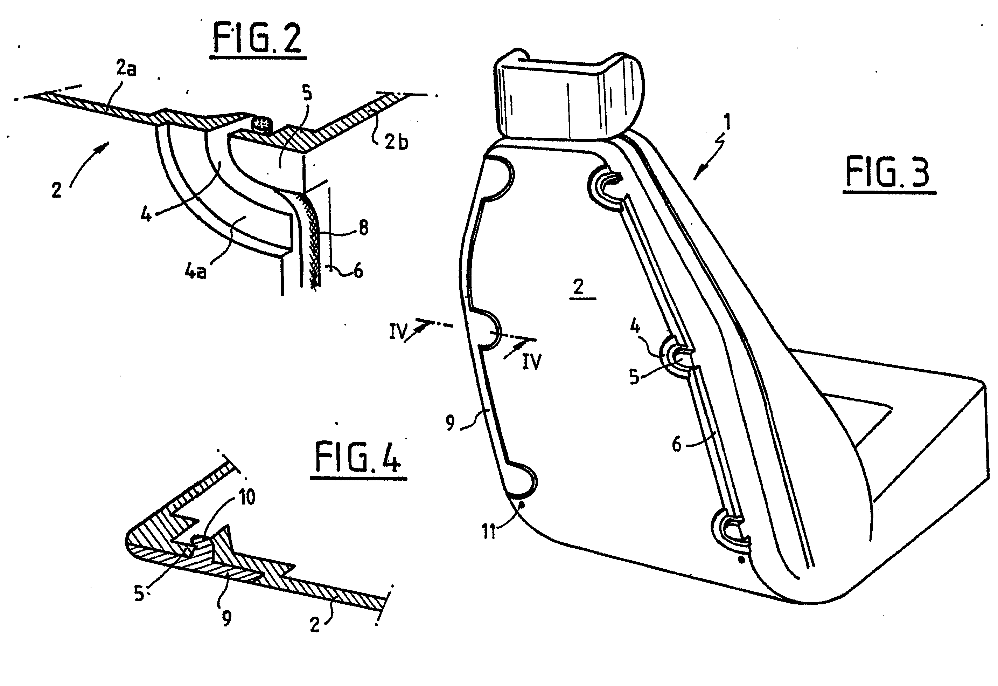

Dans le mode de réalisation de la Figure 1, les deux sièges 1a et 1b ne sont pas interchangeables, le siège 1a devant toujours être placé à gauche et le siège 1b à droite. Pour remédier à cet inconvénient, on peut prévoir des crochets 5 sur les deux bords longitudinaux du dossier 2 du siège 1, comme on le voit à la Figure 3. Dans ce cas, on obture par un cache 9 les dépressions 4a et 6 non utilisées; ce cache peut, par exemple, comporter des saillies internes 10 venant s'engager derrière les crochets 5 et être immobilisés par une vis 11. Bien entendu, si le filet 7 n'est pas utilisé, on peut prévoir un cache 9 sur chacun des bords verticaux du dossier du siège.

## Revendications

1. Siège avant individuel de véhicule dont le dossier comporte une paroi arrière rigide (2) ainsi qu'un dispositif de fixation pour un filet de retenue (7), caractérisé en ce que le dispositif de fixation est constitué par des crochets (5) et en ce que la paroi arrière (2) présente sur l'un au moins de ses bords verticaux deux ou plusieurs découpes (4) délimitant les crochets (5).

2. Siège selon la revendication 1, caractérisé par une dépression longitudinale (6) reliant les découpes (4) et permettant le passage d'un cordon élastique prévu à la périphérie du filet (7).

3. Siège selon la revendication 1 ou 2, caractérisé en ce que le garnissage arrière rigide (2) présente des découpes (4) sur chacun de ses bords longitudinaux.

4. Siège selon l'une des revendications 1 à 3, caractérisé par un cache (9) pour obturer les découpes non utilisées.

## Patentansprüche

1. Einzelvordersitz für ein Kraftfahrzeug, bei dem die Rückenlehne eine starre Rückwand (2) sowie eine Befestigungsvorrichtung für ein Rückhaltenetz (7) aufweist, dadurch gekennzeichnet, daß die Befestigungsvorrichtung durch Haken (5) gebildet wird und daß die Rückwand (2) an mindestens einem ihrer senkrechten Ränder zwei oder mehr die Haken (5) abgrenzenden Ausstanzungen (4) aufweist.

2. Sitz nach Anspruch 1, gekennzeichnet durch eine in Längsrichtung verlaufende Vertiefung (6), welche die Ausstanzungen (4) verbindet und den Durchtritt einer am Rand des Netzes (7) vorgesehenen elastischen Schnur ermöglicht.

3. Sitz nach Anspruch 1 oder 2, dadurch gekennzeichnet, daß die hintere starre Auskleidung (2) Ausstanzungen (4) an jedem ihrer beiden in Längsrichtung verlaufenden Ränder aufweist.

4. Sitz nach einem der Ansprüche 1 bis 3, gekennzeichnet durch eine Abdeckung (9) zum Verschließen der nicht benutzten Ausstanzungen.

**Claims**

1. Individual front seat for a vehicle whose seatback comprises a rigid rear wall (2) as well as a device for fixing a retainer net (7), characterized in that the fixing device is formed by hooks (5) and in that the rear seat (2) has on one at least of its vertical edges two or more cut-outs (4) defining the hooks (5).

2. Seat according to claim 1, characterized by a longitudinal depression (6) joining the cut-outs (4) and permitting the passage of an elastic cord provided at the periphery of the net (7).

3. Seat according to claim 1 or 2, characterized in that the rigid rear lining (2) has cut-outs (4) on each of its longitudinal edges.

4. Seat according to one of claims 1 to 3, characterized by a mask (9) for closing the cut-outs not used.

FIG.1

EP 0 288 386 B1

FIG.2

FIG.3

FIG.4

EP 0 288 386 B1